# EUROPEAN PATENT SPECIFICATION

(11) **EP 0 173 257 B1**
(45) Date of publication and mention of the grant of the patent: **31.03.1993**
(21) Application number: 85110576.7
(22) Date of filing: 22.08.1985
(51) Int. Cl.: G06F 11/26, G01R 31/28

(54) **Integrated circuit device**
Integriertes Schaltungsgerät
Dispositif de circuit intégré

(30) Priority: 28.08.1984 JP 178635/84
(43) Date of publication of application: 05.03.1986
(73) Proprietor: KABUSHIKI KAISHA TOSHIBA, Kawasaki-shi, Kanagawa-ken 210 (JP)
(72) Inventor: Kanuma, Akira c/o Patent Division, Minato-ku Tokyo 105 (JP)
(74) Representative: Henkel, Feiler, Hänzel & Partner

(56) References cited:
- EP-A- 0 062 431
- EP-A- 0 088 982
- US-A- 4 127 768
- US-A- 4 167 780
- US-A- 4 355 389

## Description

This invention relates to a digital integrated circuit device comprising data transfer control circuit.

Recently, level sensitive scan design (LSSD) is proposed for a function check of a digital integrated circuit. LSSD is disclosed by E. B. Eichelberger, T.W. Williams, in Poc. Design Automation Workshop 14th 1977, pp. 462 to 468, titled as "A Logic Design Structure for LSI Testability". For a function test with LSSD, memory elements such as flip-flops in the integrated circuit are serially connected one another to constitute a shift register. Data are serially inputted into the shift register at a test mode. Thereafter, a normal mode is set. At the normal mode, clock pulse is inputted to operate the combinational logic circuit. Thereafter, the test mode is again set. At this test mode, data are outputted from the shift register.

However, when LSSD is applied to an integrated circuit comprising a lot of registers or latches, a lot of additional components are required to constitute a shift register. Furthermore, a long test time is required since test data are serially inputted or outputted.

Prior art document EP-A1-0 062 431 discloses a one chip microcomputer which comprises processing means formed by a central processing unit (CPU) and a random access memory (RAM).

In this processing means normal mode and data transfer mode are selectively set. The RAM stores internal data and the CPU performs a predetermined arithmetic operation according to a program during the normal mode. A logic circuit is provided for setting the data transfer mode and normal mode to said processing means, and for designating the RAM at said data transfer mode.

Control means control transfer of data between the RAM and the outside of the microcomputer through an internal bus at the data transfer mode, to store data from the outside into the RAM and to output to the outside data from the RAM.

Further, prior art document US-A-4355 389 describes a microprogrammed information system in which an external device interface is provided so that a diagnostic command may be transferred from an external source to a command register and a data register. An exclusive memory and an address register are coupled to the data register so as to permit it to be loaded from the external source.

It is an object of the present invention to provide a digital integrated circuit for which a simple function test can be applied and in which a relatively short test time is provided.

To solve this object the present invention provides an integrated circuit device as stated in claim 1.

In the integrated circuit device according to the present invention data is written directly into storage elements (internal storage means (RAM), latch circuits, not shown, in the integrated circuit device) by address designation for initial set of data or function test. Therefore, a shortened time can be provided for data setting. Therefore, a time required for function test can also be shortened.

Also with the invention, a direct access to the external memory can be achieved.

Furthermore, with the present invention, data can be successively written into or read out of a plurality of storage means.

Also, with the invention, it is unnecessary to add an additional flip-flop to each storage means for initial set of data or function test. Therefore, the whole system is not complicated.

As clear from the above, the invention can provide an integrated circuit device fo which a simple function test can be applied and in which a relatively short test time is required.

This invention can be more fully understood from the following detailed description when taken in conjunction with the accompanying drawings, in which:
Fig. 1 shows a block diagram of a digital integrated circuit of an embodiment according to the invention;
Figs. 2A to 2H show charts of signals inputted to or outputted from a timing signal generator incorporated in the integrated circuit of Fig. 1;
Figs. 3A to 3M show charts of signals at respective portions of the integrated circuit of Fig 1;
Figs. 4A to 4M show charts of signals at respective portions of the integrated circuit of Fig. 1;
Fig. 5 shows a detailed circuit diagram of the timing signal generator incorporated in the integrated circuit in Fig. 1; and
Fig. 6 shows a detailed circuit diagram of the transfer timing signal generator incorporated in the integrated circuit in Fig. 1.

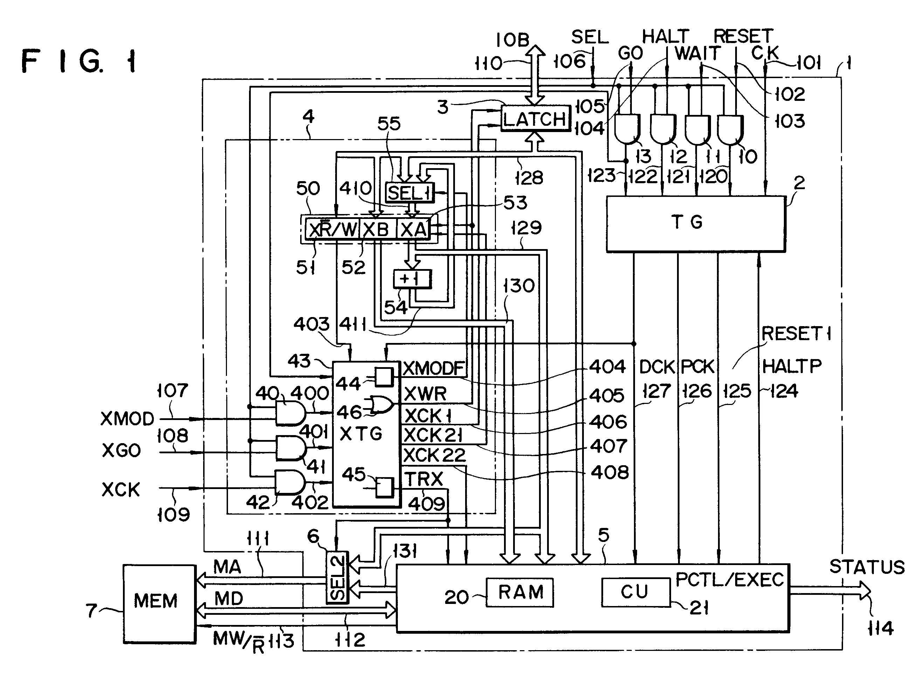

In the integrated circuit of Fig. 1, clock signal CK is inputted to signal input line 101. Reset signal RESET is inputted to signal input line 102. Wait signal WAIT is inputted to signal input line 103. Program execution halt signal HALT is inputted to signal input line 104. Program start signal GO is inputted to signal input line 105. Chip select signal SEL is inputted to signal input line 106. Transfer mode signal XMOD is inputted to signal input line 107. Transfer start signal XGO is inputted to signal input line 108. Transfer clock signal XCK is inputted to signal input line 109.

Output buses 111 and 114 are type of a plurality of bits. Memory address signal MA is outputted through output bus 111 to external memory 7 provided outside the integrated circuit 1. Status signal STATUS is outputted through output bus 114 from the integrated circuit 1. Read/write signal MW/R̅ is outputted through output signal line 113 to the external memory 7 from the integrated circuit 1.

AND gates 10, 11, 12, 13, 40, 41 and 42 are of two input terminal type. Chip select signal SEL is inputted to one input terminal of each of AND gates 10, 11, 12, 13, 40, 41 and 42. Reset signal RESET is inputted to the other input terminal of AND gate 10. Wait signal WAIT is inputted to the other input terminal of AND gate 11. Program execution halt signal HALT is inputted to the other input terminal of AND gate 12. Program start signal GO is inputted to the other input terminal of AND gate 13. Transfer mode signal XMOD is inputted to the other input terminal of AND gate 40. Transfer start signal XGO is inputted to the other input terminal of AND gate 41. Transfer clock signal XCK is inputted to the other input terminal of AND gate 42. Output signals RESET·SEL, WAIT·SEL, HALT·SEL and GO·SEL of respective AND gates 10, 11, 12 and 13 are inputted to timing signal generator (TG) 2 through signal output lines 120, 121, 122 and 123, respectively. Timing signal generator 2 also receives clock signal CK through signal input line 101. Output signals XMOD·SEL, XGO·SEL and XCK·SEL of respective AND gates 40, 41 and 42 are inputted to transfer timing signal generator (XTG) 43 in data transfer control circuit 4 through signal output lines 400, 401 and 402, respectively. Transfer timing signal generator 43 also receives output signal GO·SEL of AND gate 13 through signal output line 123.

Timing signal generator 2 receives a signal HALTP of program control/execution (PCTL/EXEC) 5 circuit or data processor 5 through a signal line 124. Timing signal generator 2 receives AND gates' outputs RESET·SEL, WAIT·SEL, HALT·SEL and GO·SEL, clock signal CK and signal HALTP and generates data transfer clock signal DCK, program execution clock signal PCK, and reset signal RESET1 for initializing data store elements in the circuit 5.

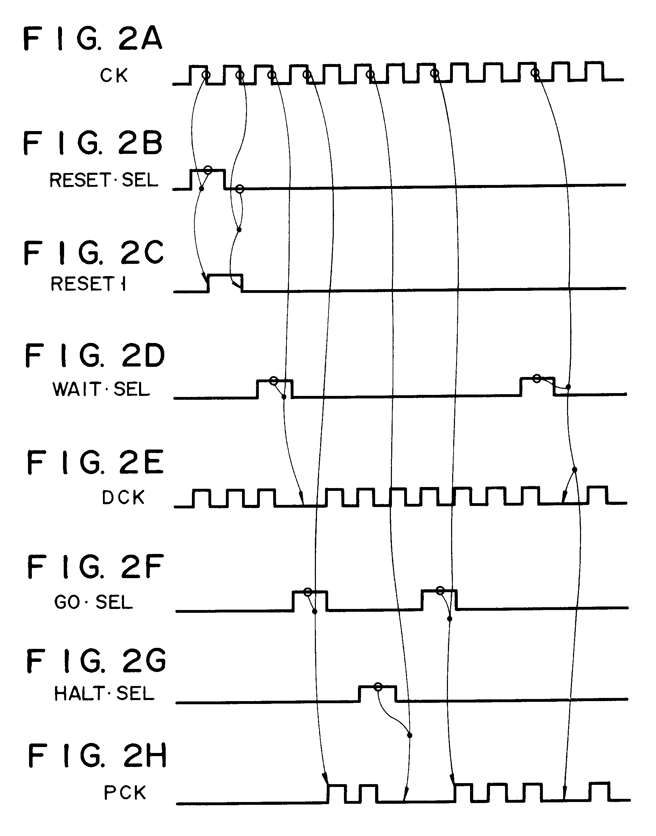

Charts of signals CK, RESET·SEL, RESET1, WAIT·SEL, DCK, GO·SEL, HALT·SEL and PCK are shown in Figs. 2A, 2B, 2C, 2D, 2E, 2F, 2G and 2H.

RESET1 (Fig. 2C) is obtained by synchronizing a rising edge of RESET·SEL (Fig. 2B) with a falling edge of CK (Fig. 2A) and by synchronizing the falling edge of RESET·SEL (Fig. 2B) with the following falling edge of CK. DCK (Fig. 2E) is substantially the same as CK except that, when a pulse of CK whose falling edge falls to 0 level during WAIT·SEL (Fig. 2D) at 1 level, a pulse corresponding to the CK pulse does not appear. PCK (Fig. 2H) is substantially the same as CK, except that, when CK falls to 0 level when GO·SEL (Fig. 2F) is at 1 level, PCK repeatedly appears. When CK whose falling edge falls to 0 level during HALT·SEL (Fig. 2G) at 1 level, no PCK appears, until CK falls to 0 level while GO·SEL (Fig. 2F) is at 1 level.

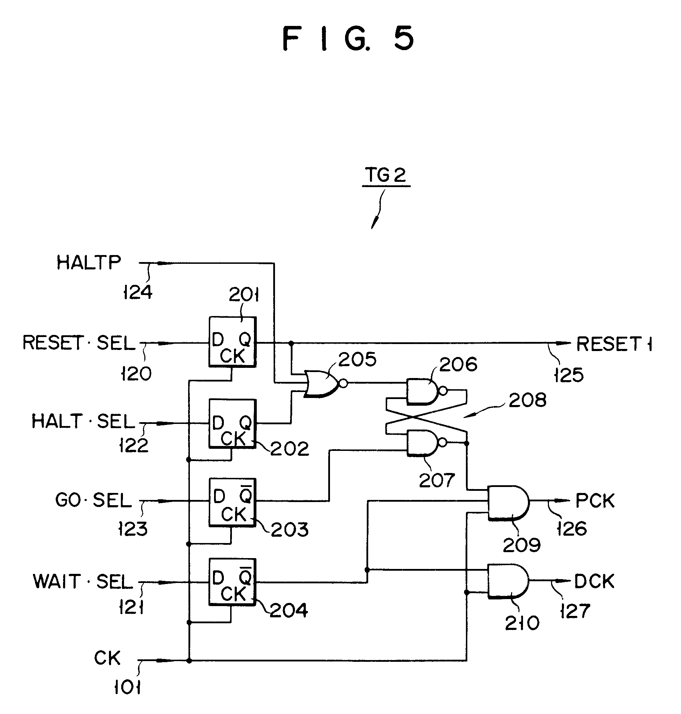

A detailed circuit of timing signal generator (TG) 2 is shown in Fig. 5. The circuit comprises four D type flip-flops 201 to 204, NOR gate 205, RS flip-flop 208 formed of two NAND gates 206 and 207, and two AND gates 209 and 210. NOR gate 205 is of three input type. AND gate 209 is of three input type. AND gate 210 is of two input type. Output terminal of NAND gate 206 is connected to one input terminal of NAND gate 207. Output terminal of NAND gate 207 is connected to one input terminal of NAND gate 206. RESET·SEL is inputted into D terminal of flip-flop 201 through signal line 120. HALT·SEL is inputted into D terminal of flip-flop 202 through signal line 122. GO·SEL is inputted into D terminal of flip-flop 203 through signal line 123. WAIT·SEL is inputted into D terminal of flip-flop 204 through signal line 121. Clock signal CK is inputted into CK terminals of flip-flops 201 to 204 and one input terminal of each of AND gates 209 and 210 through signal line 101. HALT is inputted into one terminal of NOR gate 205 through signal line 124. Q output signals of flip-flops 201 and 202 are inputted to other input terminals of NOR gate 205. Q output signal of flip-flops 201 forms RESET on signal line 125. Output signal of NOR gate 205 is inputted to the other input terminal of NAND gate 206. Q output signal of flip-flops 203 is inputted to the other input terminal of NAND gate 207. Q output signal of flip-flop 204 is inputted to another input terminal of AND gate 209 and the other input terminal of AND gate 210. Output signal of flip-flop 208 is inputted to the other input terminal of AND gate 209. AND gate 209 provides output signal PCK on signal line 126. AND gate 210 provides output signal DCK on signal line 127.

An internal bidirectional bus 110 (IOB) of a plurality of bits and an internal bidirectional bus 128 of a plurality of bits are connected to latch circuit 3. Latch circuit 3 is also connected to transfer write signal XWR and transfer clock signal XCK1 of transfer timing signal generator. Latch circuit 3 latches data on bus 110 (IOB) when XWR is at 1 level. Latch circuit 3 latches data on bus 128 when XWR is at 0 level. XCK1 is used as a synchronizing clock signal for data latching.

Program control/execution circuit or data processor 5 comprises random access memory (RAM) 20 and control circuit (CU) 21. Control circuit 21 comprises latch circuits. Control circuit 21 reads microprograms sequentially out of RAM 20 and executes an arithmetic operation according to the microprograms. PCTL/EXEC circuit 5 receives RESET1, PCK and DCK, and generates HALTP. HALTP is inputted to timing generator 2 through signal line 124. PCTL/EXEC circuit 5 is connected to latch circuit 3 by way of internal bus line 128.

Program control/execution circuit 5 is connected to data transfer control circuit 4 with transfer address bus 129, block address bus 130, signal line 408 for transfer clock signal XCK22 and signal line 409 for transfer mode signal TRX. Program control/execution circuit 5 receives transfer address signal, block address signal, transfer clock signal XCK22 and transfer mode signal TRX.

Program control/execution circuit 5 outputs status signal STATUS to the outside of integrated circuit 1 through output bus 114. Program control/execution circuit 5 also outputs to external memory 7 an address signal through address bus 131 and output bus 111, data through bidirectional bus 112, and signal MW/R̅ through output signal line 113. Address bus 131 and transfer address bus 129 are connected to selector 6. Selector 6 selects one of address signals on buses 131 and 129. The selected address signal is inputted into external memory 7 through output bus 111.

TRX of transfer timing generator 43 is supplied to selector 6. Selector 6 outputs an address signal on transfer address bus 129 to address output bus 111 when TRX is at 1 level. Selector 6 outputs an address signal on address bus 131 to address output bus 111 when TRX is at 0 level.

Data transfer control circuit 4 comprises AND gates 40, 41 and 42, timing generator XTG 43, data transfer mode register 50, incrementer 54 and selector SEL155. Data transfer mode register 50 comprises flip-flop (XR̅/W) 51, transfer block address register (XB) 52 and transfer address register (XA) 53. Flip-flop (XR̅/W) 51 is set at 1 level when data transfer is to write data into the integrated circuit, and set at 0 level when data transfer is to read data out of the integrated circuit. Transfer block address register (XB) 52 holds the number of the storage block in program control/execution circuit 5, which comprises RAM 20 and various latch circuits to or from which data are transferred. The transfer block address register (XB) 52 also holds the number of external memory 7. Transfer address register (XA) 53 holds the storage internal addresses inside the block denoted by transfer block address register (XB) 52. Bus line 128 is connected to an input terminal of flip-flop (XR̅/W) 51. Bus line 128 is connected to input terminals of transfer block address register (XB) 52. Bus line 128 is also connected to input terminals of transfer address register (XA) 53 through selector (SEL1) 55.

Incrementer 54 increases the contents of transfer address register (XA) one by one.

Selector (SEL1) 55 selects data on output bus 411 of incrementer 54 when XMODF is at 0 level, and selects data on internal bus 128 when XMODF is at 1 level. The selected data is inputted to transfer address register (XA) 53 through bus line 410.

Timing generator 43 comprises flip-flops 44, 45 and two input OR gate 46. Timing generator 43 receives data stored in flip-flop 51 through signal line 403, output signal XMOD·SEL of AND gate 40, output signal XGO·SEL of AND gate 41, output signal XCK·SEL of AND gate 42, output signal GO·SEL of AND gate 13 and data transfer clock signal DCK of timing generator 2. Timing generator 43 generates transfer mode word set signal XMODF, transfer write signal XWR, transfer clock signal XCK1, transfer clock signals XCK21, XCK22 and transfer mode signal TRX. XMODF and TRX are stored as flags in flip-flops 44 and 45, respectively.

Memory (MEM) 7 is an external memory provided outside the integrated circuit 1. Memory (MEM) 7 is connected to the integrated circuit 1 through buses 111, 112 and signal line 113.

The integrated circuit 1 is set to a data transfer mode in which data is written into or read out of RAM 20, which holds microprograms for circuit 5, and registers in PCTL/EXEC circuit 5 or memory 7, and set to a normal mode in which circuit 5 performs an arithmetic operation under the control of the control unit 21.

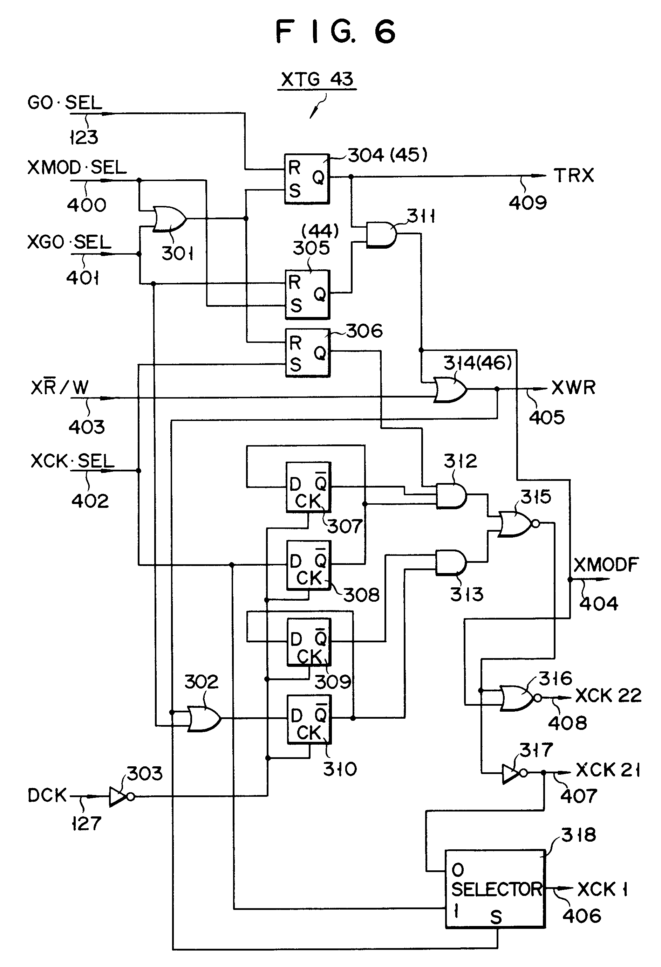

A detailed circuit of transfer timing signal generator (XTG) 43 is shown in Fig. 6. The circuit comprises OR gates 301 and 302, inverter 303, RS flip-flops 304 to 306, D type flip-flops 307 to 310, AND gates 311 to 313, OR gate 314 (46 in Fig. 1), NOR gates 315 and 316, inverter 317 and selector 318. OR gates 301, 302 and 314 are of three input type. OR gate 314 corresponds to OR gate 46 in integrated circuit of Fig. 1. NOR gates 315 and 316 are of two input type. AND gates 311 and 313 are of two input type. GO·SEL is inputted into R terminal of flip-flop 304 through signal line 123. XMOD·SEL is inputted into S terminal of flip-flop 305 and one input terminal of OR gate 301 through signal line 400. XGO·SEL is inputted into R terminal of flip-flop 305, the other input terminal of OR gate 301 and one input terminal of OR gate 302 through signal line 401. XR̅/W is inputted to one input terminal of OR gate 314 through signal line 403. XCK·SEL is inputted into S terminal of flip-flop 306, D terminal of flip-flop 308, and "1" input terminal of selector 318 through signal line 402. DCK is inputted to CK terminals of flip-flops 307 to 310 through inverter 303 by way of signal line 127. Output signal of OR gate 301 is inputted to S terminal of flip-flop 304 and R terminal of flip-flop 306. Q output signals of flip-flops 304 and 305 are inputted to input terminals of AND gate 311. Q output signal of flip-flop 304 is also outputted to signal line 409 as TRX. Output signal of AND gate 311 is inputted to the other input terminal of OR gate 314 and one input terminal of NOR gate 316. Output signal of AND gate 311 is also outputted to signal line 404 as XMODF. Output signal of OR gate 314 is inputted to the other input terminal of OR gate 302 and select (S) terminal of selector 318. Output signal of OR gate 314 is also outputted to signal line 405 as XWR. Output signal of OR gate 302 is inputted to D terminal of flip-flop 310. Q output signal of flip-flop 306 is inputted to one input terminal of AND gate 312. Q̅ output signal of flip-flop 308 is inputted to another input terminal of AND gate 312 and D terminal of flip-flop 307. Q̅ output signal of flip-flop 307 is inputted to the other input terminal of AND gate 312. Q̅ output signal of flip-flop 310 is inputted to one input terminal of AND gate 313 and D terminal of flip-flop 309. Q̅ output signal of flip-flop 309 is inputted to the other input terminal of AND gate 313. Output signals of AND gates 312 and 313 are inputted to input terminals of NOR gate 315. Output signal of NOR gate 315 is inputted to the other input terminal of NOR gate 316. Output signal of NOR gate 315 is also outputted to signal line 407 as XCK21 through inverter 317. NOR gate 316 provides output signal XCK22 on signal line 408. The output signal (XCK21) of inverter 317 is also inputted to "0" input terminal of selector 318. Selector 318 provides output signal XCK1 on signal line 406. Selector 318 selects one of the input signals inputted to "1" and "0" input terminals according to the input signal (control signal) inputted to S terminal. When the control signal is at 1 level, selector selects the input signal inputted to "1" input terminal to produce XCK1 of level on signal line 406. When the control signal is at 0 level, selector selects the input signal inputted to "0" input terminal to produce XCK1 of 0 level on signal line 406.

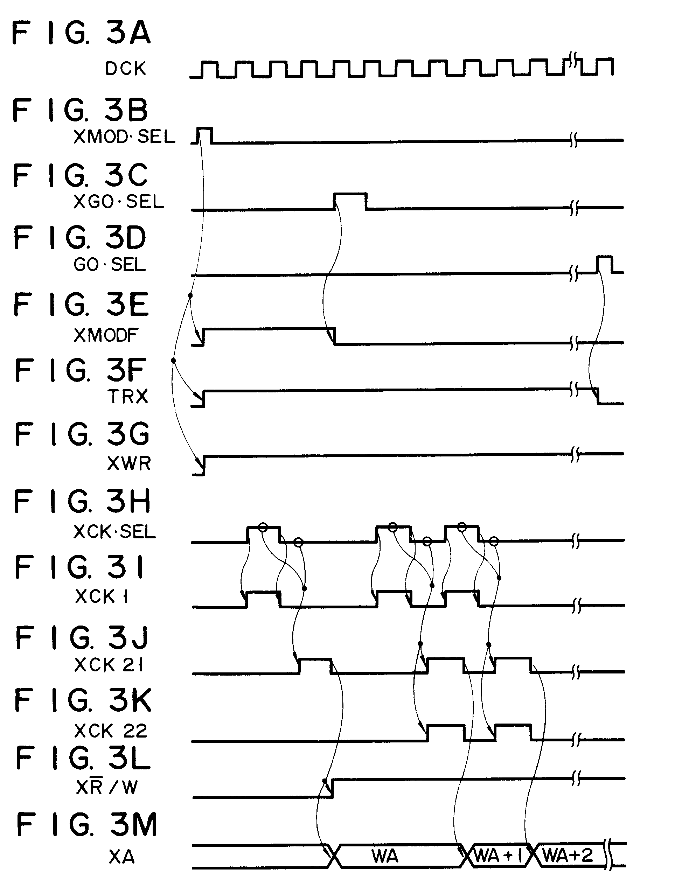

There will now be given an explanation of the operation of the integrated circuit 1 when data is written from outside into the storage elements of the integrated circuit 1, with reference to Figs. 3A to 3M.

In that case, chip select signal SEL is at 1 level and transfer mode signal XMOD is also at 1 level. Then, output signal XMOD·SEL (Fig. 3B) of AND gate 40 is at 1 level to make flip-flops 44 and 45 set, and transfer mode word signal XMODF (Fig. 3E), write signal XWR (Fig. 3G) and transfer mode signal TRX (Fig. 3F) are at 1 level. Thereafter, XCK1 (Fig. 3I) is at 1 level, when XCK·SEL (Fig. 3H) is at 1 level. Latch circuit 3 latches data on bus line 110 at a falling edge of XCK1, since XWR is now at 1 level. XCK21 (Fig. 3J) is at 1 level at falling edge of DCK (Fig. 3A), after XCK·SEL falls to 0 level. Data stored in latch circuit 3 is written into register (XR̅/W) 51 (Fig. 3L) at the following falling edge of XCK21 which occurs in synchronism with the following falling edge of DCK, so that data in flip-flop (XR̅/W) 51 is at 1 level and a head address WA from which data are to be sequentially written is set in transfer address register (XA) 53 (Fig. 3M). At the same time, transfer block address is set in transfer block address register (XB) 52. Thereafter, when XGO·SEL (Fig. 3C) is at 1 level, XMODF (Fig. 3E) is at 0 level. Thereafter, when XCK·SEL is at 1 level, XCK1 is at 1 level. Data on bus 110 is written into latch circuit 3 at the falling edge of XCK1. After XCK·SEL falls to 0 level, XCK22 (Fig. 3K) is at 1 level at the falling edge of DCK, so that data stored in latch circuit 3 is written into address WA in the block designated by transfer block address register (XB) 52 at the falling edge of XCK22. At the same time, output signal of incrementer 54 is inputted to transfer address register (XA) 53 through selector 55. Therefore, the contents of XA 53 is rewritten to WA+1. Thereafter, each time when XCK·SEL is at 1 level, 1 level appears at XCK1 and XCK21, so that the contents of transfer address register (XA) 53 are rewritten to WA+2, WA+3, ....

When the data stored in the block designated by transfer block address register (XB) 52 is RAM 20 or latches in control circuit 21, external data is written into RAM 20 or latches in control circuit 21, respectively. Data written into RAM 20 is a microprogram for controlling circuit 5.

The data writing is thus completed. Thereafter, when GO·SEL (Fig. 3D) is at 1 level, flip-flop 45 in transfer timing generator (XTG) 43 is reset and TRX is at 0 level. Thereafter, the mode is changed from data transfer mode to normal mode. Each time when PCK at 1 level is outputted from timing generator 2, circuit 5 performs an arithmetic operation according to the program.

When the block designated by transfer block address register (XB) 52 is external memory 7 provided outside the integrated circuit 1, the contents stored in latch circuit 3 is outputted to bidirectional bus 112 through internal bus 128 and PCTL/EXEC 5. At the same time, MW/R̅ is at 1 level. Transfer address signal is transferred from transfer address register (XA) 53 to address output bus 111 through transfer address bus 129 and selectors 6. Data is thus written into the designated address of external memory 7.

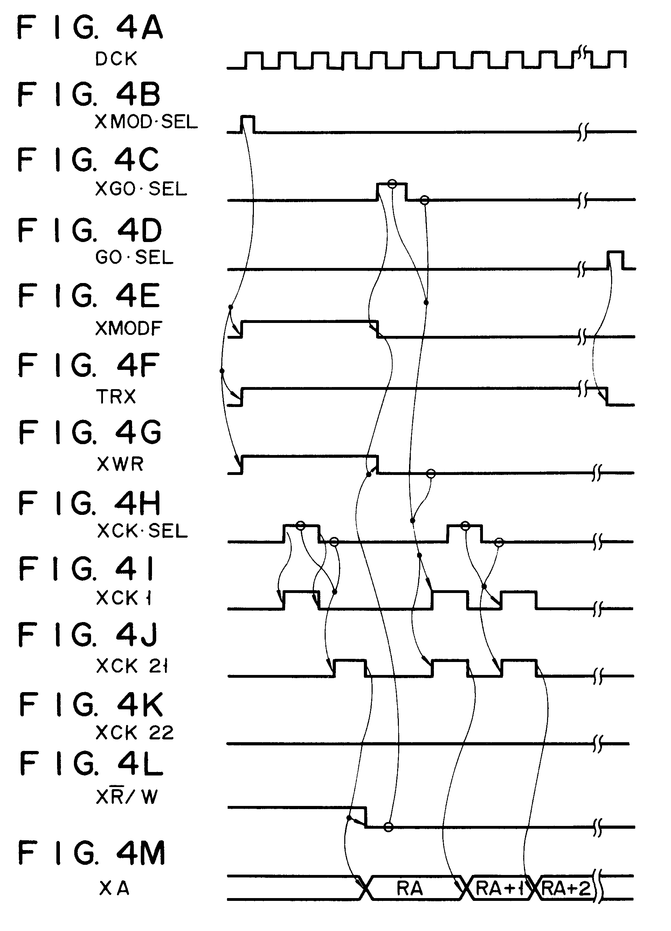

There will now be given an explanation of the operation of the integrated circuit 1 when data is read at data transfer mode out of the storage elements in integrated circuit 1 or external memory 7, with reference to Figs. 4A to 4M. This means to carry out a function test of integrated circuit 1.

The sequence from when chip select signal SEL is at 1 level and XMOD·SEL (Fig. 4B) is also at 1 level to when data stored in latch circuit 3 is written into data transfer mode register (XR̅/W) 51 (Fig. 4L) is substantially the same as in data write mode. A difference is only that 0 level data is written into register (XR̅/W) 51 at the data read mode while 1 level data is written into register (XR̅/W) 51 in the data writing. Therefore, when XGO·SEL (Fig. 4C) is at 1 level, flip-flop 44 is reset and XMODF (Fig. 4E) and XWR (Fig. 4G) are at 0 level, so that latch circuit 3 is set in data read state. After XGO·SEL (Fig. 4C) falls to 0 level, XCK1 (Fig. 4I) is at 1 level at a falling edge of DCK (Fig. 4A), so that data is read out of the storage element at address RA designated by transfer address register (XA) 53 (Fig. 4M) in the block designated by transfer block address register (XB) 52 at the following falling edge of XCK21 (Fig. 4J). The data is written into latch circuit 3 through bus 128. Also, at the falling edge of XCK21 the contents of transfer address register (XA) 53 are increased by one and rewritten to RA+1. The data at address RA written into latch circuit 3 is outputted to bus 110 when XCK21 falls. After second XCK·SEL (second occurrence in Fig. 4H) falls, the following XCK1 and XCK21 appear at the falling edge of DCK, so that data is read out of the address RA+1 in the block designated by transfer block address register (XB) 52 and written into latch circuit 3. At the falling edge of XCK21, the contents of the transfer address register (XA) 53 are increased to have RA+2. Data are thus sequentially read out. Thereafter, flip-flop 45 is made reset by GO·SEL (Fig. 4D) and TRX (Fig. 4F) is at 0 level, so that the mode is changed from the data transfer mode to a normal mode.

When the block designated by transfer block address register (XB) 52 is external memory (MEM) 7, transfer address stored in transfer address register (XA) 53 is inputted into external memory (MEM) 7 through transfer address bus 129, selector 6 and output bus 111. When MW/R̅ is at 0 level, data is read out of the address of memory 7 designated by address on bus 111. The data is written into latch circuit 3 through bidirectional bus 112, PCTL/EXEC 5 and internal bus 128.

Control signal TRX is at 0 level when a program is performed at normal mode. Therefore, an address signal from PCTL/EXEC 5 is used as a memory address at normal mode.

This invention is not limited to the above-mentioned embodiment. For example, a field of two or more bits of the upper bits of transfer address register (XA) 53 may be used as the block address field. Further, latch circuit 3 may be replaced by a tri-state gate circuit. The tri-stage gate circuit is controlled according to XWR so that input or output of data may be controlled.

## Claims

1. An integrated circuit device (1) for which a function test can be applied, said integrated circuit device comprising:
- processing means (5) in which normal mode and data transfer mode are selectively set, said processing means (5) comprising an internal data storage means (20) and performing a pre-determined arithmetic operation according to a program which has controlling functions vis-à-vis said processing means (5), during said normal mode, wherein at the normal mode, the processing means (5) reads data from an external memory (7), makes arithmetic or logic operations on the data, and writes back the results of these operations to the external memory (7),
- transfer controlling means (4) having;
- means (45) for setting said data transfer mode (TRX = 1) and normal mode (TRX = 0) to said processing means (5); and
- address designation means (50, XB) for designating said internal storage means (20) in said processing means (5) at said data transfer mode;
for controlling at said data transfer mode, when said internal storage means (20) is designated by said address designation means (50, XB), transfer of a microprogram between said internal storage means (20) and a first external I/O bus (110) of said integrated circuit device (1) through an internal bus (128) in order to either:
- store a microprogram from the said first external I/O bus (110) into said internal storage means (20), or
- output a microprogram to the said first external I/O bus (110) from the said internal storage means (20),
characterized in that
said address designation means (50, XB) further include means for designating said external memory (7) which is connected to said processing means (5) by a second external I/O bus (112), thereby allowing said transfer controlling means (4) to control at said data transfer mode, when said external storage (7) is designated by said address designation means (50, XB), transfer of data between said external storage (7) and the said first external I/O bus (110) through both said internal bus (128) and said processing means (5) in order to either:
- store data from the said first external I/O bus (110) into the said external memory (7) or
- output data from the said external memory (7) to the said first external I/O bus (110), wherein the function test is carried out as follows:
- first, at the data transfer mode, a microprogram and data are written into the internal storage means (20) and the external memory (7), respectively,
- secondly, at the normal mode, the processing means (5) reads data from the external memory (7), makes arithmetic operations on the data, and writes back the results to the external memory (7), as specified by the microprogram in the internal storage means (20), and
- lastly, at the data transfer mode, the result data are read from the external memory (7) to the first external I/O bus (110) through the second external I/O bus (112) and the integrated circuit device (1) in order to be compared with the expected data.

2. An integrated circuit device according to claim 1, characterized in that said address designation means (50, XB) designates data storage elements at a unit of block comprising at least the designated data storage element (20, 7) which data is written into or read from.

3. An integrated circuit device according to claim 1, characterized in that said transfer controlling means (4) further comprises means (46) for determining whether a data transfer is to write data into data storage elements (7, 20) or to read out of said storage elements (7, 20).

4. An integrated circuit device according to claim 1, characterized in that said transfer controlling means (4) comprises means (43) for generating timing signals for data transfer when data transfer mode is set.

## Patentansprüche

1. Integriertes Schaltungsgerät (1), das einem Funktionstest unterzogen werden kann, wobei das integrierte Schaltungsgerät folgendes umfaßt:
- eine Verarbeitungseinrichtung (5), in der selektiv Normalmodus und Datenübertragungsmodus gesetzt werden, wobei die Verarbeitungseinrichtung (5) eine interne Datenspeicherungseinrichtung (20) umfaßt und eine vorgegebene Arithmetikoperation gemäß einem Programm ausführt, das gegenüber der Verarbeitungseinrichtung (5) im Normalmodus steuernde Funktionen wahrnimmt, und wobei im Normalmodus die Verarbeitungseinrichtung (5) Daten aus einem externen Speicher (7) ausliest, arithmetische oder logische Operationen mit den Daten ausführt, und die Ergebnisse dieser Operationen nach dem externen Speicher (7) zurückschreibt;
- eine Übertragungssteuerungseinrichtung (4) mit:
- einer Einrichtung (45) für das Setzen der Verarbeitungseinrichtung (5) auf den Datenübertragungsmodus (TRX = 1) und den Normalmodus (TRX = 0); und
- einer Einrichtung zur Adressenangabe (50, XB) zur Angabe bzw. Adressierung der internen Speichereinrichtung (20) in der Verarbeitungseinrichtung (5) unter dem Datenübertragungsmodus;
für die Steuerung unter diesem Datenübertragungsmodus im Falle der Angabe der internen Speichereinrichtung (20) durch die Einrichtung zur Adressenangabe (50, XB) der Übertragung eines Mikroprogramms zwischen der internen Speichereinrichtung (20) und einem ersten externen E/A-Bus (110) des integrierten Schaltungsgeräts (1) über einen internen Bus (128), um entweder:
- ein Mikroprogramm von ersten externen E/A-Bus (110) in der internen Speichereinrichtung (20) zu speichern oder
- ein Mikroprogramm an den ersten externen E/A-Bus (110) aus der internen Speichereinrichtung (20) auszugeben,
dadurch gekennzeichnet, daß
die Einrichtung zur Adressenangabe (50, XB) des weiteren eine Einrichtung zur Angabe bzw. Adressierung des externen Speichers (7) umfaßt, die über einen zweiten externen E/A-Bus (112) mit der Verarbeitungseinrichtung (5) verbunden ist, wodurch die Übertragungssteuerungseinrichtung (4) in die Lage versetzt wird, im Datenübertragungsmodus bei Angabe bzw. Adressierung des externen Speichers (7) durch die Einrichtung zur Adressenangabe (50, XB) die Datenüber tragung zwischen dem externen Speicher (7) und dem ersten externen E/A-Bus (110) über sowohl den internen Bus (128) als auch die Verarbeitungseinrichtung (5) zu steuern, um entweder:
- Daten vom ersten externen E/A-Bus (110) nach den externen Speicher (7) zu speichern oder
- Daten aus dem externen Speicher (7) auf den ersten externen E/A-Bus (110) auszugeben, wobei ein Funktionstest wie folgt ausgeführt wird:
- erstens werden im Datenübertragungsmodus ein Mikroprogramm und Daten in die interne Speichereinrichtung (20) bzw. in den externen Speicher (7) eingeschrieben,
- zweitens liest die Verarbeitungseinrichtung (5) im Normalmodus die Daten aus dem externen Speicher (7) aus, führt arithmetische Operationen mit den Daten aus und schreibt die Resultate wie durch das Mikroprogramm in der internen Speichereinrichtung (20) vorgeschrieben nach dem externen Speicher (7) zurück, und
- abschließend werden im Datenübertragungsmodus die resultierenden Daten über den zweiten externen E/A-Bus (112) und die integrierte Schaltung (1) aus dem externen Speicher (7) auf den ersten externen E/A-Bus (110) ausgelesen, um mit den erwarteten Daten verglichen zu werden.

2. Integriertes Schaltungsgerät gemäß Anspruch 1, dadurch gekennzeichnet, daß die Einrichtung zur Adressenangabe (50, XB) Datenspeicherelemente in einer Blockeinheit angibt bzw. adressiert, die mindestens das angegebene Datenspeicherelement (20, 7) enthält, nach dem Daten geschrieben bzw. von dem Daten ausgelesen sind.

3. Integriertes Schaltungsgerät gemäß Anspruch 1, dadurch gekennzeichnet, daß die Übertragungssteuerungseinrichtung (4) des weiteren eine Einrichtung (46) umfaßt, die festlegt, ob eine Datenübertragung zum Einschreiben der Daten in die internen Datenspeicherelemente (7, 20) oder zum Auslesen der internen Speicherelemente (7, 20) erfolgen soll.

4. Integriertes Schaltungsgerät gemäß Anspruch 1, dadurch gekennzeichnet, daß die Übertragungssteuerungseinrichtung (4) eine Einrichtung (43) zur Generierung von Zeitsignalen für die Datenübertragung bei gesetztem Datenübertragungsmodus umfaßt.

## Revendications

1. Dispositif de circuit intégré (1) auquel un test fonctionnel peut être appliqué, ledit dispositif de circuit intégré comprenant :
un moyen de traitement (5) dans lequel un mode normal et un mode transfert de données sont établis de façon sélective, ledit moyen de traitement (5) comprenant un moyen de stockage de données interne (20) et réalisant une opération arithmétique prédéterminée conformément à un programme qui comporte des fonctions de commande vis-à-vis dudit moyen de traitement (5) pendant ledit mode normal, dans lequel, pour le mode normal, le moyen de traitement (5) lit des données dans une mémoire externe (7), effectue des opérations arithmétiques ou logiques sur les données et écrit en retour les résultats de ces opérations dans la mémoire externe (7) ;
un moyen de commande de transfert (4) comportant :
un moyen (45) pour établir ledit mode transfert de données (TRX = 1) et ledit mode normal (TRX = 0) dans ledit moyen de traitement (5) ; et
un moyen de désignation d'adresse (50, XB) pour désigner ledit moyen de stockage interne (20) contenu dans ledit moyen de traitement (5) pour ledit mode transfert de données ;
pour commander pour ledit mode transfert de données lorsque ledit moyen de stockage interne (20) est désigné par ledit moyen de désignation d'adresse (50, XB) un transfert d'un microprogramme entre ledit moyen de stockage interne (20) et un premier bus d'entrée/sortie externe (110) dudit dispositif de circuit intégré (1) par l'intermédiaire d'un bus interne (128) afin de :
soit stocker un microprogramme en provenance dudit premier bus d'entrée/sortie externe (110) dans ledit moyen de stockage interne (20),
soit émettre en sortie un microprogramme sur ledit premier bus d'entrée/sortie externe (110) depuis ledit moyen de stockage interne (20),
caractérisé en ce que :
ledit moyen de désignation d'adresse (50, XB) inclut en outre un moyen pour désigner ladite mémoire externe (7) qui est connectée audit moyen de traitement (5) au moyen d'un second bus d'entrée/sortie externe (112), ce qui permet audit moyen de commande de transfert (4) de commander, pour ledit mode transfert de données, lorsque ladite mémoire externe (7) est désignée par ledit moyen de désignation d'adresse (50, XB), un transfert de données entre ladite mémoire externe (7) et le premier bus d'entrée/sortie externe (110) par l'intermédiaire à la fois dudit bus interne (128) et dudit moyen de traitement (5) afin de :
soit stocker des données en provenance dudit premier bus d'entrée/sortie externe (110) dans ladite mémoire externe (7),
soit émettre en sortie des données en provenance de ladite mémoire externe (7) sur ledit premier bus d'entrée/sortie externe (110), le test fonctionne étant mis en oeuvre comme suit :
tout d'abord, pour le mode transfert de données, un microprogramme et des données sont respectivement écrits dans le moyen de stockage interne (20) et dans la mémoire externe (7) ;
en second lieu, pour le mode normal, le moyen de traitement (5) lit des données dans la mémoire externe (7), effectue des opérations arithmétiques sur les données et écrit en retour les résultats dans la mémoire externe (7), comme spécifié par le microprogramme contenu dans le moyen de stockage interne (20) ; et
en dernier lieu, pour le mode transfert de données, les données de résultat sont lues dans la mémoire externe (7) sur le premier bus d'entrée/sortie externe (110) par l'intermédiaire du second bus d'entrée/sortie externe (112) et du dispositif de circuit intégré (1) afin d'être comparées aux données attendues.

2. Dispositif de circuit intégré selon la revendication 1, caractérisé en ce que ledit moyen de désignation d'adresse (50, XB) désigne des éléments de stockage de données en tant qu'unité de bloc comprenant au moins un élément de stockage de données désigné (20, 7) dans lequel des données sont écrites ou lues.

3. Dispositif de circuit intégré selon la revendication 1, caractérisé en ce que ledit moyen de commande de transfert (4) comprend en outre un moyen (46) pour déterminer si oui ou non un transfert de données consiste à écrire des données dans des éléments de stockage de données (7, 20) ou à lire des données dans lesdits éléments de stockage (7, 20).

4. Dispositif de circuit intégré selon la revendication 1, caractérisé en ce que ledit moyen de commande de transfert (4) comprend un moyen (43) pour générer les signaux de cadencement pour un transfert de données lorsqu'un mode transfert de données est établi.
